# EUROPEAN PATENT APPLICATION

(11) **EP 1 342 700 A1**
(43) Date of publication of application: **10.09.2003**
(21) Application number: 01999536.4
(22) Date of filing: 05.12.2001
(51) Int. Cl.: C03B 37/00, G02B 6/00

(54) **METHOD OF PRODUCING OPTICAL FIBER**

(30) Priority: 05.12.2000 JP 2000369680
(71) Applicant: Sumitomo Electric Industries, Ltd., Osaka-shi, Osaka 541-0041 (JP)
(72) Inventor: KUWAHARA, K. c/o Yokohama Wks Sumitomo Elc Ind Ltd, Yokohama Kangawa 244-8588 (JP); TSUCHIYA, I. c/o Yokohama Wks Sumitomo Elc ind Ltd, Yokohama-shi Kanagawa 244-8588 (JP)
(74) Representative: HOFFMANN - EITLE
(86) International application number: JP0110627
(87) International publication number: WO02046114

(57) **Abstract**

A method of making an optical fiber employing a wavelength in an infrared region as a wavelength band in use is provided, in which an optical fiber 1 is exposed to an atmosphere containing hydrogen at a concentration of 0.05 vol% but not higher than 4.0 vol% after being drawn and taken up with a bobbin 2 before being put into use, whereas the hydrogen treatment temperature is lower than 50°C, preferably 30°C or lower, more preferably at room temperature, whereby the increase in loss caused by hydrogen is small even when the optical fiber is used in a wide band, so that the optical fiber can be made efficiently and safely with an optimal hydrogen treatment.

## Description

### Technical Field

The present invention relates to a method of making an optical fiber, which restrains the optical fiber from increasing loss under the influence of hydrogen.

### Background Art

It has been well known that transmission loss increases with time when optical fibers are exposed to atmospheres containing hydrogen, in optical fiber communications in which wavelengths in an infrared region are employed as a wavelength band in use. For this fact, diagnoses, studies, and measures have been undertaken heretofore, whereby manufacturing techniques have improved to such an extent that the increase in transmission loss in a particular wavelength has become a unproblematic level. As information communications have been employing optical networks more and more, a wide range of wavelengths, e.g., from 1.3 µm to 1.58 µm, has come into use in wavelength division multiplexing (WDM) transmissions. The stability of transmission loss with respect to wavelengths in use in such a wide range has not been sufficient yet.

There are three modes of increase in loss in optical fibers caused by hydrogen in the infrared region as follows (see the IEICE Transactions, Vol. J68-B, No. 7, pp. 795-801, 1985 and the IEICE Transactions, Vol. J72-C-I, No. 1, pp. 45-52, 1989):

### (1) Absorption Loss by Hydrogen Molecule

The absorption loss caused by hydrogen molecules (H₂) themselves diffused into fiberglass. In the increase in loss caused thereby, there are absorption near wavelengths of 1.24 µm and 1.7 µm, respectively. In this absorption loss, the amount of loss saturates in a relatively short time, whereas the saturated amount is determined by the hydrogen partial pressure and temperature in the vicinity of the fiber. Also, the absorption loss is reversible, so that it disappears when hydrogen stops entering from the outside or when temperature is raised so as to release hydrogen molecules to the outside, whereby the initial state can be restored.

### (2) Loss Caused by Reaction Product

Hydrogen molecules diffused into fiberglass chemically react with lattice-defect in the fiberglass, thereby forming a structure having an absorption in the infrared region, such as hydroxyl group (-OH). There are loss increase peaks at wavelengths of 1.38 µm, 1.41 µm, and 1.43 µm, respectively, though the increase in loss caused by this reaction product is dependent on the kind and concentration of dopants so that it may vary more or less depending on the kind of fiber. The increase in loss at a wavelength of 1.38 µm is presumed to be caused due to the fact that a hydrogen molecule reacts with "-SiO·" which is a non-bridging oxygen hole center within the fiberglass, thereby generating "Si-OH". The increase in loss at a wavelength of 1.41 µm, which is characteristic of germanium-doped optical fibers, is presumed to be caused due to the fact that a hydrogen molecule reacts with "-GeO·" which is a non-bridging oxygen hole center concerning Ge, thereby generating "Ge-OH". The increase in loss at a wavelength of 1.43 µm has not been elucidated yet in terms of mechanism, thus remaining as an unclear increase in loss. Each of these increases is irreversible and tends to rise with time, while it is unknown whether they have a saturated value or not.

### (3) Excessive Loss in Diffusing Process of Hydrogen Molecule

In the process of hydrogen molecules initially diffusing and reacting in the fiberglass after drawing, there is a case where an increase in loss occurs at a wavelength of 1.52 µm concurrently with the increase in loss at a wavelength of 1.38 µm. This loss in increase exhibits a certain peak amount, and then decays with time so as to disappear eventually. Though various theories have been known concerning the increase and decay of loss, they have not been made definite yet.

After the problem of hydrogen absorption had been realized, measures were taken in optical cable structures against the increase in loss according to the above-mentioned (1), so that the problem is not apparent. However, (2) and (3) are highly influential since an increase in loss on the order of dB/km may be caused when hydrogen molecules diffuse into an optical fiber on the order of ppm.

As measures against the above-mentioned (1), a manufacturing technique which is suppresses to suppress the increase in loss caused by hydrogen to 0.01 dB/km or less, for example, has been established in optical fibers for common use for a wavelength of 1.3 µm or 1.55 µm, which is located between wavelengths exhibiting increases in loss. Mainly considered as a state where an optical fiber is placed in a hydrogen-containing atmosphere is hydrogen generation from water intruding into an optical cable and from coating materials such as silicone resins used in coating members within the optical cable and the like. Conventionally, structural and manufactural measures are taken against the increase in transmission loss caused by hydrogen, so as to prevent water from intruding into or running in the optical cable, select coating materials, use hermetic coating, and so forth, thereby preventing hydrogen from coming into contact with the optical fiber.

In WDM (wavelength division multiplexing) transmissions, however, optical fibers are required to have a stability in transmission loss over a wide range, e.g., from 1.3 µm to 1.58 µm. Also, there is a case where an optical fiber for WDN has a core region doped with a high concentration of Ge such that its relative refractive index difference Δn with respect to its cladding becomes 1% or greater in order to control its chromatic dispersion. As a result, lattice defects, which also cause loss increase due to hydrogen, are prone to occur. There is a limit to reduce such an increase in loss in a wide band by improvements in structures and coating materials alone.

Japanese Patent Application Laid-Open No. HEI 4-260634 discloses a technique in which an optical fiber is placed in a hydrogen-containing atmosphere at the drawing stage in its manufacturing step, so that lattice-defect in fiberglass react with hydrogen beforehand, thus lowering the increase in loss caused by a reaction with hydrogen after making the optical fiber. Here, the technique described in this publication discloses increases in loss caused by hydrogen at wavelengths of 1.38 µm and 1.53 µm.

The method of making an optical fiber according to the technique of the above-mentioned publication is one in which an optical fiber is exposed to a hydrogen-containing atmosphere at the drawing stage in the making process thereof. This method is one in which a hydrogen gas is mixed with an inert gas in a drawing furnace at a high temperature, or one in which a chamber filled with hydrogen is provided at the lower end of the drawing furnace so that the optical fiber before forming a coating immediately after being drawn upon melting is passed through the hydrogen-containing atmosphere. However, causing a hydrogen gas to flow through a high-temperature furnace is accompanied with a risk of explosion, thus being problematic in terms of safety. Also, since the hydrogen treatment of optical fiber is carried out at a high temperature, reactions which do not proceed in a low-temperature range such as room temperature are accelerated by thermal energy, whereby irreversible excess loss components caused by the resulting reaction products may increase, thus yielding a problem.

On the other hand, Japanese Patent Application Laid-Open No. HEI 7-277770 and Japanese Patent Publication No. 2542356 disclose techniques in which an optical fiber is exposed to a hydrogen-containing atmosphere so as to be heat-treated after being drawn before being put into use, so that lattice-defects in fiberglass react with hydrogen beforehand, thereby suppressing the increase in loss after use. However, these disclosed techniques do not specify the hydrogen concentration in the hydrogen treatment. Also, the hydrogen treatment temperature is merely indicated as a temperature higher than room temperature (specifically at least 50°C), without any disclosure concerning optimal treatment conditions.

In view of the foregoing circumstances, it is an object of the present invention to provide a method of making an optical fiber in which the increase in loss caused by hydrogen is small even when used in a wide band, so that the optical fiber can be made efficiently and safely with an optimal hydrogen treatment.

### Disclosure of the Invention

The present invention provides a method of making an optical fiber employing a wavelength in an infrared region as a wavelength band in use, the method comprising the step of exposing the optical fiber to an atmosphere containing hydrogen at a concentration of at least 0.05 vol% but not higher than 4.0 vol% after the optical fiber is drawn and taken up with a bobbin before being put into use. The optical fiber is exposed to the hydrogen-containing atmosphere at a hydrogen treatment temperature lower than 50°C, preferably 30°C or lower, more preferably at normal temperature.

### Brief Description of the Drawings

Fig. 1 is a view for explaining an embodiment of the present invention;
Fig. 2 is a chart showing an example of refractive index distribution of an optical fiber employing the present invention;
Fig. 3 is a graph showing changes in loss in an optical fiber subjected to no hydrogen treatment in a comparative test;
Fig. 4 is a graph showing changes in loss in an optical fiber subjected to a hydrogen treatment in the comparative test; and
Fig. 5 is a graph showing results of a test investigating circumstances under which excessive loss is caused by hydrogen treatments.

### Best Modes for Carrying Out the Invention

As a premise, the present invention restrains loss from increasing due to reactions of hydrogen molecules diffused into fiberglass with lattice defects within the fiberglass. As mentioned in the section of Background Art, the increase in loss in this mode is causedby the irreversible absorption peaks at 1.38 µm, 1.41 µm, and 1.43 µm, and the transient absorption peak at 1.52 µm, which is generated when hydrogen molecules are initially diffused into the optical fiberglass and decays thereafter. It is essential for an optical fiber having a wide wavelength band in use to suppress this increase in loss.

The present invention is based on an idea that, since the increase in loss is caused by lattice defects in an optical fiber, the lattice defects in the optical fiber should be eliminated or reduced before the optical fiber is laid (before use). For eliminating the lattice defects, the optical fiber is placed in a hydrogen-containing atmosphere beforehand, so as to diffuse hydrogen molecules into the optical fiber, thus making them positively react with lattice-defect until they become inactive.

Though this is contradictory to the knowledge that optical fibers should not be exposed to hydrogen-containing atmospheres, it can restrain raising transmission loss caused by hydrogen diffusion in the optical fiber, after the optical fiber is laid. Such a hydrogen treatment is particularly effective in optical fibers doped with a high concentration of germanium in order to reduce their core diameter, since they are prone to generate lattice defects. Since lattice defects of the optical fiber are finally determined by drawing, the hydrogen treatment is carried out after drawing. This point is also disclosed in Japanese Patent Application Laid-Open No. HEI 4-260634 noted in the explanation of Background Art.

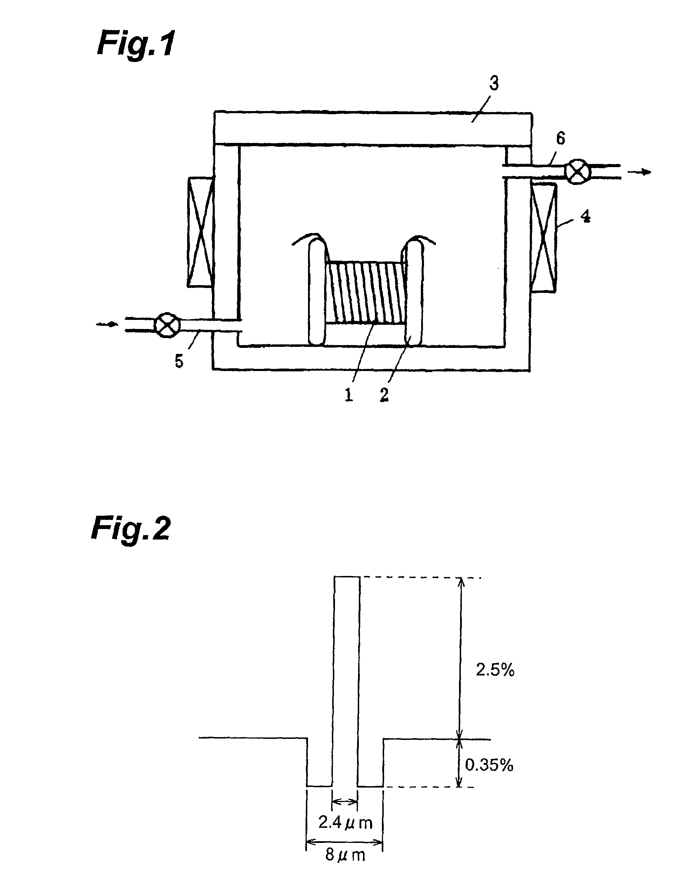

Embodiments of the present invention will now be explained. In the present invention, after an optical fiber is drawn and is coated with a resin, the resulting product is taken up with a fiber bobbin and then is placed, together with the bobbin, in an atmosphere containing hydrogen at a predetermined concentration. Fig. 1 is a view showing an outline of a hydrogen treatment tank, in which 1, 2, 3, 4, 5, and 6 refer to an optical fiber after drawing, a bobbin, a hydrogen treatment tank, a heater, a gas inlet, and a gas outlet, respectively. The hydrogen treatment tank 3 can be formed by a sealed tank of a simple structure comprising the heater 4, gas inlet 5, arid gas outlet 6.

It is preferred that the hydrogen concentration, temperature, time, and the like of hydrogen treatment conditions be determined according to the absorption loss of hydrogen molecules (H₂) at a wavelength of 1.24 µm. The amount of lattice defects within an optical fiber is presumed to be on the order of ppm or less. The optical fiber exhibits an absorption loss of about 10 dB/km (saturated value) at a wavelength of 1.24 µm in an atmosphere containing hydrogen at a hydrogen concentration of 100 vol% at 1 atm. Since the hydrogen concentration and the increase in absorption loss have a positive correlation therebetween, absorption loss will increase by 0.005 dB/km if hydrogen is diffused into the core part of the optical fiber in an atmosphere containing hydrogen at a concentration of 0.05 vol%, for example. Since it is unnecessary to suppress the peak amount of absorption loss to a level lower than the above-mentioned concentration, it will be sufficient if hydrogen treatment conditions are set such that the absorption loss becomes 0.005 dB/km or greater. Therefore, the hydrogen concentration is preferably 0.05 vol% or higher, since it will take a long time until hydrogen is diffused so as to reach the core part if the concentration is too low.

The hydrogen gas (H₂) for the hydrogen treatment is mixed with a nitrogen gas or a noble gas so as to lower the concentration thereof, and then is introduced into the hydrogen treatment tank 3 from the inlet 5. Preferably, the hydrogen concentration is 4.0 vol% or less. Making the hydrogen concentration higher than 4.0 vol% does not shorten the processing time so much, but incurs a risk of explosion. When the hydrogen concentration is 4.0 vol% or less, there will be no risk of explosion even if the hydrogen treatment tank 3 in a state filled with a gas is opened to the air.

Though the hydrogen treatment temperature may be room temperature (20°C), hydrogen may be heated with the heater 4 in order to accelerate its diffusion into the optical fiberglass. However, the temperature within the treatment tank is kept at 60°C or lower, more preferably lower than 50°C. Irreversible excess loss gradually becomes remarkable in all the region of the wavelength band in use when the treatment temperature exceeds 50°C, 60°C in particular. This is presumed to be due to the fact that, for example, a reaction of "Ge-O-X + H₂ -> GeH + X-OH (X = Si, Ge)" or the like proceeds, but the reaction mechanism has not completely been elucidated yet.

More preferably, the hydrogen treatment temperature is 30°C or lower. The increase in loss does not vary substantially at a room temperature of 5°C to 30°C, whereas excess loss tends to occur on the longer wavelength side when temperature exceeds 30°C. Performing the hydrogen treatment in a state approximating a room temperature of 30°C or lower generates no excessive loss, and makes no heating apparatus necessary, which is advantageous in terms of equipment.

When making a center core part with a relative refractive index difference Δn of at least 1% with respect to a cladding in order to control diffusion, lattice defects are prone to occur due to the high Ge doping amount, whereby such a hydrogen treatment is advantageous when stabilizing the transmission loss.

Using a dispersion-compensating optical fiber having the profile shown in Fig. 2 as a specific example of the present invention, a comparative test was carried out concerning hydrogen resistance characteristics of an optical fiber subjected to the hydrogen treatment of the present invention and an optical fiber without the hydrogen treatment. The optical fiber subjected to the hydrogen treatment is one exposed to an atmosphere containing hydrogen at a concentration of 1.0 vol% at room temperature (20°C) for 3 days (72 hours) at the atmospheric pressure (1 atm). Here, at least 2 days (48 hours) are necessary at a hydrogen concentration of 1.0 vol%. No large differences were seen even when the concentration was 3%.

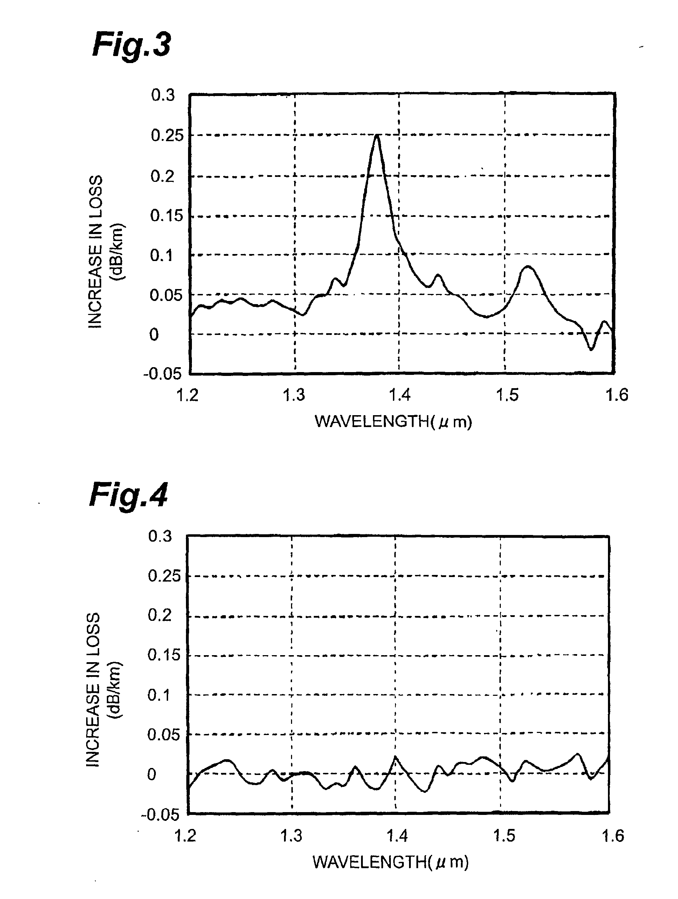

The comparative test was carried out by comparing how much the increase in loss (differential value) between before and after exposure to an atmosphere containing hydrogen at 1.0 vol% at room temperature for 48 hours after the making was in each of the optical fibers subjected to the hydrogen treatment and without the hydrogen treatment after the lapse of 3 weeks from the treatment. Fig. 3 shows changes in loss of the optical fiber without the hydrogen treatment in the comparative test, whereas Fig. 4 shows changes in loss of the optical fiber subjected to the hydrogen treatment in the comparative test.

Referring to Fig. 3, increase loss peaks are seen in the vicinity of 1.38 µm and 1.52 µm, whereas an increase in loss of about 0.03 to 0.05 dB/km is generated throughout the other region. The peak in the vicinity of 1.38 µm is one caused by "Si-OH" which is generated due to a reaction between a non-bridging oxygen hole center (-SiO·), which is a kind of defects, and H₂, i.e., "2SiO· + H₂ -> 2Si-OH". The 1.52-µm peak has been proved to be a transient peak, but its mechanism has not been elucidated yet. Though causes of the increase in loss throughout the other wavelength band have not been elucidated yet, the increase in loss in such a wide wavelength band is often seen when the 1.52-µm peak occurs, whereby this increase is presumed to be one in synchronization with the 1.52-µm peak.

In Fig. 4, by contrast, the peaks seen in Fig. 3 do not exit at all, whereas the increase in loss throughout the whole band is 0.02 dB/km or less. Since only the differential value between before and after the exposure to the hydrogen-containing atmosphere at the time of the comparative test is shown here, however, it does not mean that the absolute loss value is low. Nevertheless, the optical fiber of Fig. 4 subjected to the hydrogen treatment can restrain loss from increasing due to hydrogen even when placed in a hydrogen-containing atmosphere even after being formed into an optical cable and laid. Therefore, as compared with the optical fiber of Fig. 3 without the hydrogen treatment, whose increase in loss is indefinite, the transmission loss of the transmission line is more stable and is easy to specify, whereby circuits in conformity to optical transmission characteristics are easier to design.

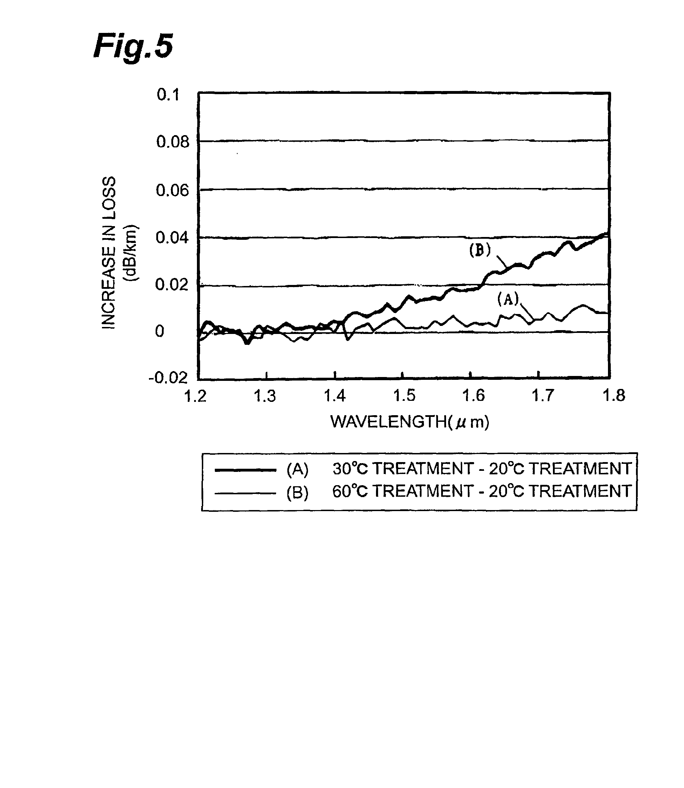

Fig. 5 is a graph showing results of a comparative test further investigating circumstances under which excessive loss occurs in the optical fiber of Fig. 4 subjected to hydrogen treatments. The optical fiber of the comparative test subjected to hydrogen treatments is a dispersion-compensating optical fiber having the profile shown in Fig. 2. The hydrogen treatments in this test were carried out at respective hydrogen treatment temperatures of 20°C, 30°C, and 60°C, while commonly employing exposure to an atmosphere containing hydrogen at a concentration of 1.0 vol% (99% nitrogen atmosphere) for 4 days (96 hours) at the atmospheric pressure (1 atm). Also, a single optical fiber was equally divided into three, so that the test samples did not vary from each other in the optical fibers used for the test. Further, since the amount of dissolved hydrogen molecules varied depending on the hydrogen treatment temperature, the change in loss was measured after each sample was left in the air for 3 weeks (21 days) after the hydrogen treatment so as to eliminate hydrogen from within the optical fiberglass. In Fig. 5, (A) shows the loss difference between the respective losses obtained when the hydrogen treatment temperature was 20°C and 30°C, whereas (B) shows the loss difference between the respective losses obtained when the hydrogen treatment temperature was 20°C and 60°C.

As a result, the loss difference (A) between the respective losses obtained when the hydrogen treatment temperature was 20°C and 30°C was 0.01 dB/km or less in the whole band of 1.2 to 1.8 µm without any substantial difference. The loss difference (B) between the respective losses obtained when the hydrogen treatment temperature was 20°C and 60°C was 0.01 dB/km or less without any substantial difference in a band of 1.45 µm or lower, but increases as the wavelength is longer beyond a wavelength of 1.45 µm. This is presumed to be the excess loss occurring when the hydrogen treatment temperature is made higher. Therefore, it is preferred that the hydrogen treatment be carried out at a temperature of 30°C or lower when the optical fiber is used in a wide band including a wavelength of 1.45 µm or longer.

### Industrial Applicability

According to the hydrogen treatment of the present invention, as can be seen from the foregoing explanation, after an optical fiber is drawn, it is taken up with a bobbin and then is exposed to a hydrogen-containing atmosphere, whose treatment is carried out at a low hydrogen concentration at a low temperature. As a consequence, the optical fiber can be made safely without the risk of explosion, while generating no excessive loss therein. Also, the handling and workability for the hydrogen treatment are favorable, whereby the equipment for carrying out the treatment can be made relatively simple and inexpensive.

## Claims

1. A method of making an optical fiber employing a wavelength in an infrared region as a wavelength band in use, said method comprising the step of exposing said optical fiber to an atmosphere containing hydrogen at a concentration of at least 0.05 vol% but not higher than 4.0 vol% after said optical fiber is drawn and taken up with a bobbin before being put into use.

2. A method of making an optical fiber according to claim 1, wherein said hydrogen-containing atmosphere has a temperature lower than 50°C.

3. A method of making an optical fiber according to claim 2, wherein said hydrogen-containing atmosphere has a temperature of 30°C or lower.

4. A method of making an optical fiber according to one of claims 1 to 3, wherein transmission loss at a wavelength of 1.24 µm yields a difference of at least 0.005 dB/km between before and after the exposure to said hydrogen-containing atmosphere.

5. A method of making an optical fiber according to one of claims 1 to 4, wherein said optical fiber is one having a core part doped with a high concentration of germanium such that a center core part exhibits a relative refractive index difference Δn of at least 1% with respect to a cladding.
